# EUROPEAN PATENT APPLICATION

(11) **EP 2 755 382 A1**
(43) Date of publication of application: **16.07.2014**
(21) Application number: 13275009.2
(22) Date of filing: 14.01.2013
(51) Int. Cl.: H04N 7/14, H04L 29/06

(54) **Wireless video and audio delivery system**

(71) Applicant: Ramdeo, Pradeep, New York, NY 10472 (US)
(72) Inventor: Ramdeo, Pradeep, New York, NY 10472 (US)
(74) Representative: Wilson Gunn

(57) **Abstract**

A wireless video and audio delivery system includes a wireless camera to generate a video and audio feed when operated by a first person. An internet accessible device receives the video and audio feed from the wireless camera, thereby allowing a second person located at the internet accessible device to see and hear the video and audio feed at the same time the wireless camera is operated by the first person.

## Description

### BACKGROUND OF THE INVENTION

### Field of the Invention:

The present invention relates to a wireless camera recording device, and more particularly, a video and audio delivery system.

The present invention affords individuals the ability to watch live events, homes, children, pets, and special occasions via a wireless camera and a laptop, computer, smart phone, or any technology that can display an internet protocol (IP) address. With the video and audio delivery system, a user can record an occasion or event, such as weddings, birthday parties, a baby's first steps, a sporting event, or inside a home while on vacation. The wireless camera can then send a video and audio feed to the secured internet protocol address that could allow another individual to watch the event live through any internet accessible device. Families and friends, anyone who frequently travels, or individuals that work with disseminating video and audio feeds will appreciate the convenience and practicality that the system provides.

### Description of the Prior Art:

Many people have various events and occasions for which they want to be present. Oftentimes, these events can overlap, making individuals choose which event or occasion they will attend. In addition, many people travel for work or business and may miss important milestones in a child's or loved one's life. These events or milestones can be recorded, but individuals are only able to watch a playback of the recording and not a live feed. Also, in the instances of long events, recording space can be limited. Additionally, media and news crews are constantly traveling to different scenes with heavy equipment. They may potentially miss capturing something due to the cumbersome equipment. An effective solution is necessary.

Numerous innovations for video cameras have been provided in the prior art that will be described. Even though these innovations may be suitable for the specific individual purposes to which they address, however, they differ from the present invention.

A FIRST EXAMPLE, U.S. Patent Office Publication No. 2006/0203097, Published on 09-14-2006, to Koga teaches the invention, receiving a camera operation screen request from a client terminal, determines a code to be transmitted to the client terminal and transmits the code to the client terminal together with camera operation screen information, registers to a memory a code attached to a drive request signal transmitted from the client terminal, and, receiving a drive request signal from a client terminal, controls the camera in accordance with the signal in case a code matching a registered code is included, and rejects the drive request in case a code matching the registered code is not included. With this configuration, when a plurality of users operate a common camera unit via a network, a code determined by the camera unit is returned from a client terminal and the client terminal is identified based on whether the code is matching. This eliminates the needs for issuing a special id for identifying a client terminal and allows easy operation anywhere from the network by using a general-purpose browser.

A SECOND EXAMPLE, U.S. Patent Office Publication No. 2007/0046237, Published on 03-01-2007, to Lakshmanan et al. teaches a robotic system that has a drive chassis having a drive motor and a drive element attached to the first drive motor, Additionally, a motor controller system provides drive signals to the first drive motor. A logic controller provides control signals to the motor controller. A network system is provided for communicating with the logic controller. At least one peripheral element communicates with the network system. There is additionally provided a wireless arrangement for communicating wirelessly with the network system.

A THIRD EXAMPLE, U.S. Patent Office Publication No. 2007/0209056, Published on 09-06-2007, to Mayuzumi teaches an image transmission apparatus (adaptor apparatus) that is configured to transmit image data captured by an image pickup apparatus to an output apparatus. The adaptor apparatus is configured to obtain identification information of the image pickup apparatus and type information of the output apparatus. The adaptor apparatus selects a set of parameters corresponding to the identification information of the image pickup apparatus and the type information of the output apparatus. The adaptor apparatus outputs the selected set of parameters to the image pickup apparatus which converts image data into visible image data based on the selected set of parameters. The adaptor apparatus transmits visible image data received from the image pickup apparatus to the output apparatus.

A FOURTH EXAMPLE, U.S. Patent Office Publication No. 2007/0219654, Published on 09-20-2007, to Frink et al. teaches a contest system and method providing an interactive Internet-based contest including steps of providing at least one real-time image on at least one networked display, and verifying an answer to at least one question posed in reference to the image. The system and method in alternate embodiments provides a network controllable vehicle equipped with a network camera for providing at least one image on at least one networked display.

A FIFTH EXAMPLE, U.S. Patent Office Publication No. 2008/0231712, Published on 09-25-2008, to Frink et al. teaches a camera used to acquire video images at the remote site having a means for acquiring a video image, a wireless transceiver for transmitting the video images to a wireless Internet router. The camera includes a built-in web server for serving the images over the Internet to client computers having standard Internet web browsers. Moreover, the camera further includes an enclosure supporting the image acquisition means and web server hardware, a battery in a circuit with the camera, a hand operated switch adapted to close the circuit, and a handgrip for use by an operator in carrying the camera.

A SIXTH EXAMPLE, U.S. Patent Office Publication No. 2009/0172088, Published on 07-02-2009, to Chan et al. teaches a network browsing method for browsing video/audio data shot by an IP camera. A local computer is coupled to a LAN (local area network) to detect the IP camera. The network browsing method includes the steps of: executing an application program by the local computer to obtain an identification code stored in the IP camera; transmitting for registering the identification code to a DDNS (Dynamic Domain Name Server) by the application program; obtaining a personal IP camera address and a personal server address so as to couple to the IP camera and control the IP camera via the personal IP camera address and the personal server address; and coupling to a service server via the personal server address so as to obtain the video/audio data shot by the IP camera. The service server captures the video/audio data shot by the IP camera via the Internet.

A SEVENTH EXAMPLE, U.S. Patent Office Publication No. 2009/0191913, Published on 07-30-2009, to Jones teaches a video camera system configured to provide real-time video streams over subscriber-based networks. The video camera system includes a network camera with a built-in web server, a cellular modem/Ethernet gateway, and a power supply. The video camera system can operate over any subscriber-based network, such as AT&T, Verizon Wireless, Sprint Nextel, T-Mobile, and the like.

A EIGHTH EXAMPLE, U.S. Patent Office Document No. 7,710,452, Issued on 05-04-2010, to Lindberg teaches a method of remotely detecting rule violations at an outdoor site according to one aspect of the invention includes installing a self-contained VMU at the outdoor site near ground elevation, including affixing a chassis of the VMU to a permanent mount. The VMU is operated in a low-power standby mode that includes passively monitoring an ambient magnetic field at the outdoor site to detect a disturbance caused by a presence of a substantial ferrous object. In response to a detection of a disturbance in the ambient magnetic field, the VMU exits the low-power standby mode and initiates an active operating mode. The active operating mode includes operating a video camera by the VMU to capture video data; and wirelessly transmitting a signal representing at least a portion of the video data to a computer network. The video data is received by a remote node in the computer network via the computer network, and stored in association with a database record.

A NINTH EXAMPLE, U.S. Patent Office Publication No. 2010/0328458, Published on 12-30-2010, to Holloway teaches handheld communications devices which include a communications port, at least one battery, and processing circuitry configured to automatically determine a network address of a network node connected to the communications port, to communicate with the network node using the determined network address, and to consume energy stored by the battery. Communications methods include using a handheld communications device connected to a network node, automatically determining a network address of the network node; using the handheld communications device, communicating with the network node using the determined network address; and based on the communicating and using the handheld communications device, verifying that the network node is operational.

A TENTH EXAMPLE, U.S. Patent Office Publication No. 2011/0169950, Published on 07-14-2011, to Weaver teaches an apparatus and a method for wireless communication and remote surveillance. According to one embodiment, the apparatus includes a CMOS based high definition video camera with the structure to perform analytics. Furthermore, the same network access point that sends/receives audio-video signals from the video camera also sends/receives wireless broadband Internet data, which can comply with any wireless networking standard, including but not limited to WiMAX, Wi-Fi and LTE.

It is apparent now that numerous innovations for video cameras have been provided in the prior art that are adequate for various purposes. Furthermore, even though these innovations may be suitable for the specific individual purposes to which they address, accordingly, they would not be suitable for the purposes of the present invention as heretofore described.

### SUMMARY OF THE INVENTION

AN OBJECT of the present invention is to provide a video and audio delivery system that avoids the disadvantages of the prior art.

ANOTHER OBJECT of the present invention is to provide a video and audio delivery system that is simple and inexpensive to manufacture.

STILL ANOTHER OBJECT of the present invention is to provide a video and audio delivery system that is simple to use.

BRIEFLY STATED, STILL YET ANOTHER OBJECT of the present invention is to provide a video and audio delivery system which comprises a wireless camera to generate a video and audio feed when operated by a first person. An internet accessible device receives the video and audio feed from the wireless camera, thereby allowing a second person located at the internet accessible device to see and hear the video and audio feed at the same time the wireless camera is operated by the first person.

The novel features which are considered characteristic of the present invention are set forth in the appended claims. The invention itself, however, both as to its construction and its method of operation, together with additional objects and advantages thereof, will be best understood from the following description of the specific embodiments when read and understood in connection with the accompanying drawing.

### BRIEF DESCRIPTION OF THE DRAWING

The figures of the drawings are briefly described as follows:
Figure 1 is a block diagram of the present invention;
Figure 2 is a perspective view showing a person using the wireless camera of the present invention;
Figure 3 is a perspective view showing another person using the internet accessible device, being a laptop of the present invention;
Figure 4 is a front perspective view of the wireless camera;
Figure 5 is a rear perspective view of the wireless camera; and
Figure 6 is a front perspective view of another wireless camera with a lens unit that is removably attached thereto.

### REFERENCE NUMERALS UTILIZED IN THE DRAWING

- **110**: video and audio delivery system
- **112**: wireless camera of system **110**
- **113**: video and audio feed from wireless camera **112**
- **114**: first person
- **116**: internet accessible device of system **110**
- **118**: second person
- **120**: web server in wireless camera **112**
- **122**: internet protocol address in device **116**
- **124**: password in device **116**
- **126**: camcorder in wireless camera **112**
- **128**: digital camera in wireless camera **112**
- **130**: high definition control in wireless camera **112**
- **132**: zoom control in wireless camera **112**
- **134**: audio-focus control in wireless camera **112**
- **136**: USB port in wireless camera **112**
- **138**: lens unit for wireless camera **112**
- **140**: laptop computer for device **116**

### DETAILED DESCRIPTION OF THE PREFERRED EMBODIMENT

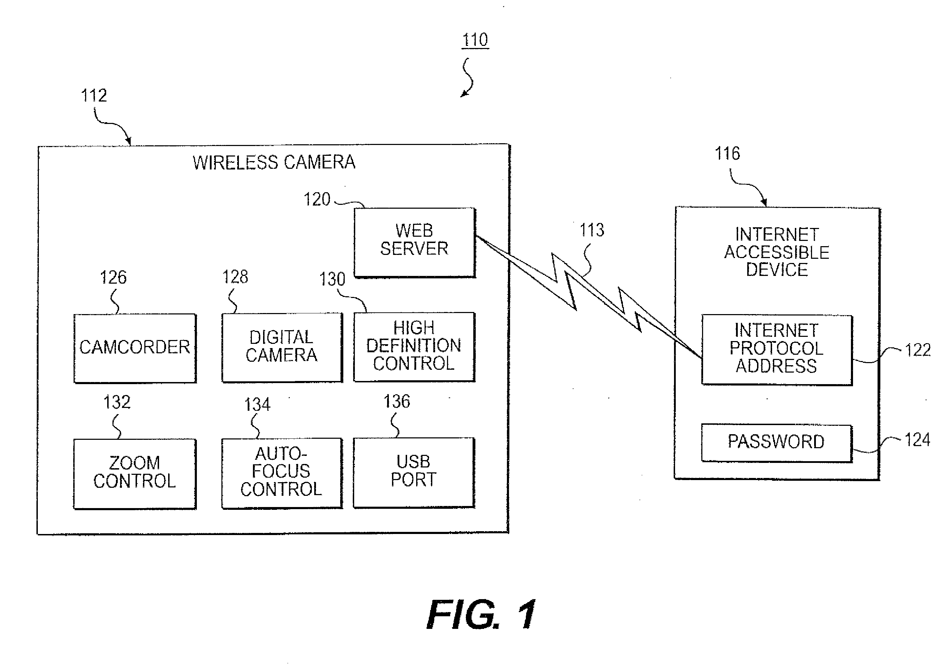

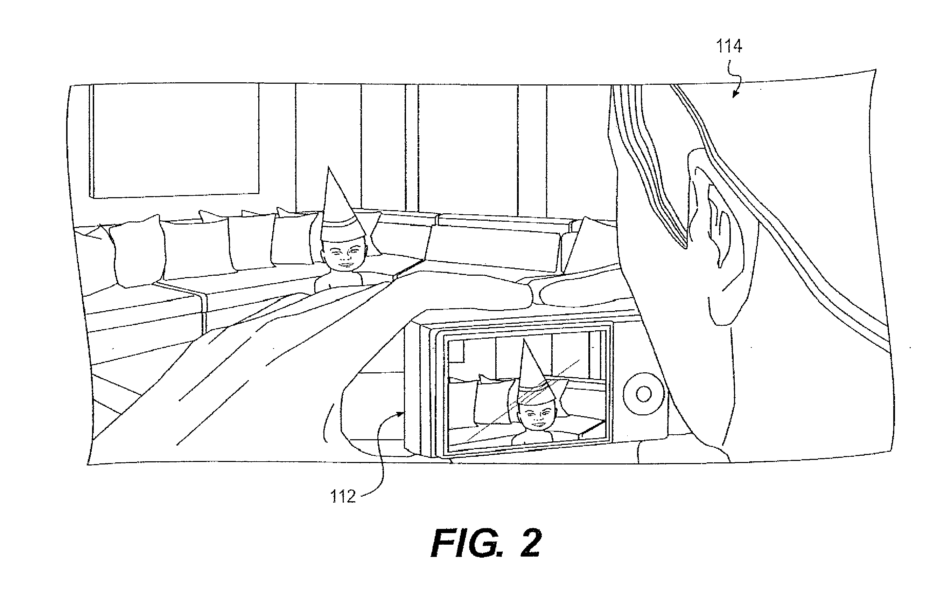

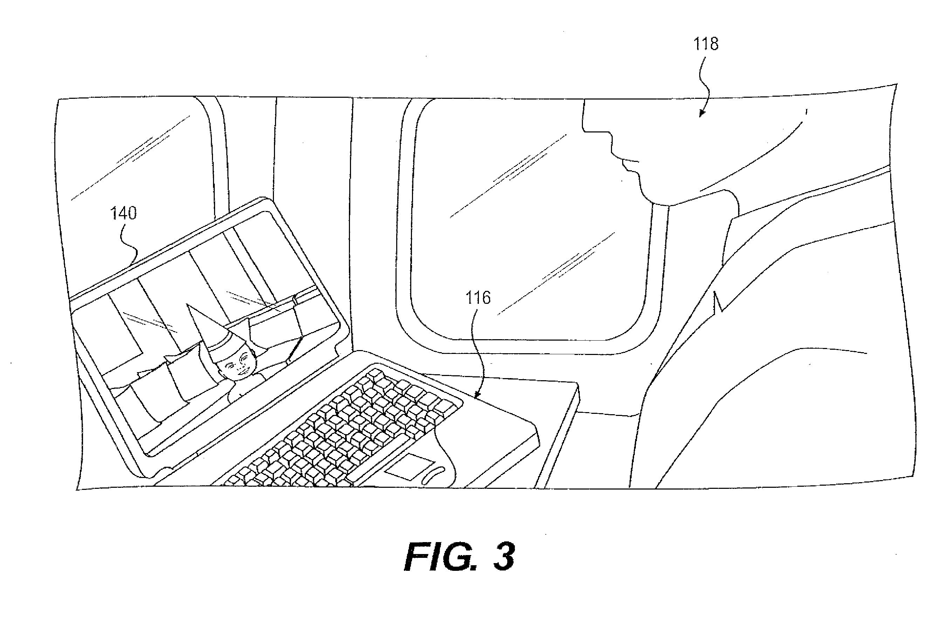

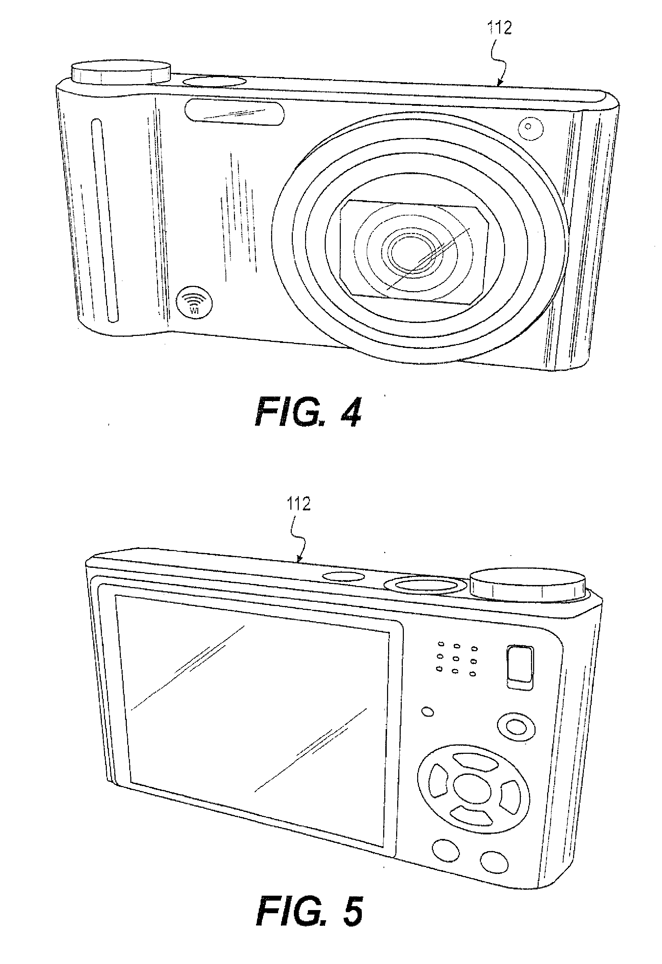

In Figure **1****,** the present invention is a video and audio delivery system **110** which comprises a wireless camera **112,** as shown in Figures **4** and **5****,** to generate a video and audio feed **113** when operated by a first person **114,** as shown in Figure **2****.** An internet accessible device **116** receives the video and audio feed **113** from the wireless camera **112,** thereby allowing a second person **118** located at the internet accessible device **116,** as shown in Figure **3****,** to see and hear the video and audio feed **113** at the same time the wireless camera **112** is operated by the first person **114.**

A web server **120** is within the wireless camera **112.** An internet protocol address **122** is within the internet accessible device **116.** The web server **120** within the wireless camera **112** can transmit the video and audio feed **113** to the internet protocol address **122** within the internet accessible device **116.** The internet accessible device **116** comprises a password **124** for the internet protocol address **122** to protect the video and audio feed **113** from being seen and heard by an unauthorized person.

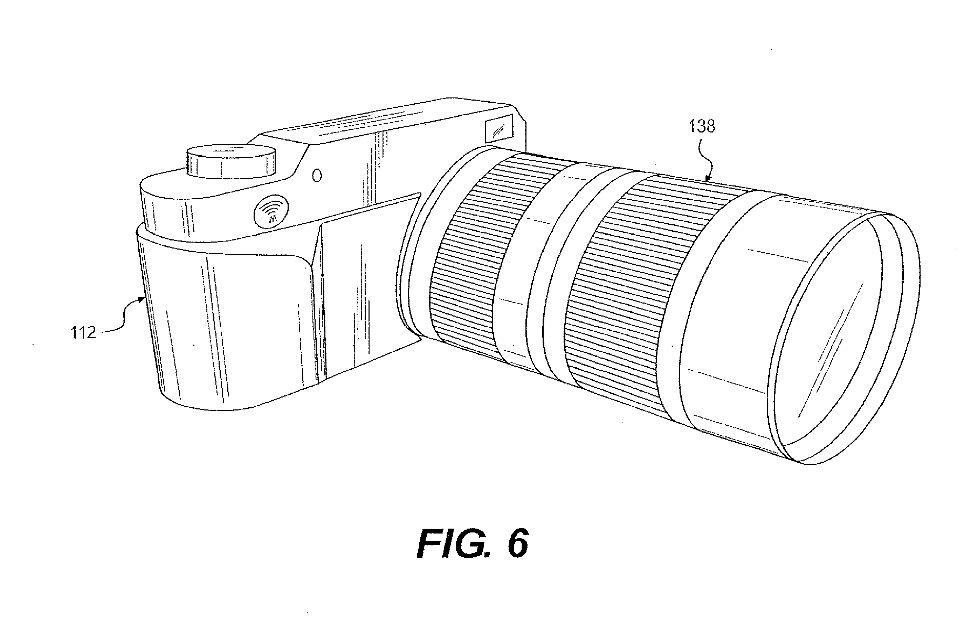

The wireless camera **112** comprises a built-in camcorder **126,** a digital camera **128,** a high definition control **130,** a zoom control **132,** an audio-focus control **134** and a USB port **136.** In Figure **6** the wireless camera **112** can further comprise a lens unit 138 that is removably attached thereto. The internet accessible device **116** shown in Figure 3 is a laptop computer **140.** The internet accessible device **116** can also be a personal computer or a smart phone (not shown).

To create the video and audio system **110** the following steps are taken.
**1.** Generate the video and audio feed **113** with the wireless camera **112** when operated by the first person **114.**
**2.** Receive the video and audio feed **113** with the internet accessible device **116** from the wireless camera **112** to allow the second person **118** located at the internet accessible device **116** to see and hear the video and audio feed **113** at the same time the wireless camera **112** is operated by the first person **114.**
**3.** Provide the web server **120** within the wireless camera **112.**
**4.** Place the internet protocol address **122** within the internet accessible device **116,** whereby the web server **120** in the wireless camera **112** can transmit the video and audio feed **113** to the internet protocol address **122** within the internet accessible device **116.**
**5.** Utilize the password **124** in the internet accessible device **116** for the internet protocol address **122** to protect the video and audio feed **113** from being seen and heard by an unauthorized person.

In review, the video and audio delivery system **110** contains a wireless camera **112** operated by a first person **114** to transmit a video and audio feed **113** to an internet accessible device **116,** allowing a second person **118** at a different location the ability to watch events, milestones, or special occasions live. The system **110** has the ability to transfer the video and audio feed **113** via a built-in web server **120** in the wireless camera **112** to an internet protocol address **122** in the internet accessible device **116.** To protect the video and audio feed **113** from unwanted viewers, the internet protocol address **122** can be secured, requiring a password **124.** Different functionalities can be offered on the wireless camera **112,** including a camcorder **126,** a digital camera **128,** high definition control **130,** zoom control **132,** auto-focus control **134,** and a USB port **136.** The wireless camera **112** can come with a removable lens unit **138** and in a multitude of sizes, models or designs to suit user preference. For media or news crews, the wireless camera **112** can come with different functionalities to suit their needs. The exact specifications may vary. The internet accessible device **116** can be a laptop computer **140,** a personal computer or a smart phone (not shown).

It will be understood that each of the elements described above, or two or more together, may also find a useful application in other types of constructions differing from the types described above.

While the invention has been illustrated and described as embodiments of a video and audio delivery system, accordingly it is not limited to the details shown, since it will be understood that various omissions, modifications, substitutions and changes in the forms and details of the device illustrated and its operation can be made by those skilled in the art without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute characteristics of the generic or specific aspects of this invention.

The foregoing exemplary descriptions and the illustrative preferred embodiments of the present invention have been explained in the drawings and described in detail, with varying modifications and alternative embodiments being taught. It is also worth noting features, design, color, data storage, size and etc. may vary with each model and as technology advances components, features, functions hardware, software and the likes may be added, removed or modified to further update and upkeep the described invention, while the invention has been so shown, described and illustrated, it should be understood by those skilled in the art that equivalent changes in form and detail may be made therein without departing from the true spirit and scope of the invention, and that the scope of the present invention is to be limited only to the claims except as precluded by the prior art. Moreover, the invention as disclosed herein may be suitably practiced in the absence of the specific elements which are disclosed herein.

## Claims

1. A wireless video and audio delivery system which comprises:
a) a wireless camera to generate a video and audio feed when operated by a first person;
b) an internet accessible device to receive the video and audio feed from the wireless camera, thereby allowing a second person located at the internet accessible device to see and hear the video and audio feed at the same time the wireless camera is operated by the first person;
c) a web server within the wireless camera; and
d) an internet protocol address within the internet accessible device, whereby the web server within the wireless camera can transmit the video and audio feed to the internet protocol address within the internet accessible device.

2. The system as recited in Claim 1, wherein the internet accessible device comprises a password for the internet protocol address to protect the video and audio feed from being seen and heard by an unauthorised person.

3. The system as recited in either Claim 1 or 2, wherein the wireless camera comprises a built-in camcorder, a digital camera, a high definition control, a zoom control and an audio-focus control.

4. The system as recited in Claim 3 wherein the wireless camera comprises a processor, a usb and/or other types of data ports, a built in data storage device[hdd] [ssd] [etc], a sim card port and a built in antenna, full compatible with portable wifi [hot spot] devices.

5. The system as recited in any preceding Claim, wherein the wireless camera further comprises a lens unit that is removably attached thereto.

6. The system as recited in any preceding Claim, wherein the internet accessible device is a laptop computer and/or all types of computers.

7. The system as recited in any preceding Claim, wherein the internet accessible device is a personal computer.

8. The system as recited in any preceding Claim, wherein the internet accessible device is a smart phone.

9. The system as recited in any of Claims 1 to 7 wherein the internet accessible device is a smart tv.

10. A method for providing a live video and audio feed, comprising the steps of:
a) generating the video and audio feed with a wireless camera when operated by a first person; and
b) receiving the video and audio feed with an internet accessible device from the wireless camera to allow a second. person located at the internet accessible device to see and hear the video and audio feed at the same time the wireless camera is operated by the first person.

11. The method as recited in Claim 10, further comprising the steps of:
a) providing a web server within the wireless camera;
b) placing an internet protocol address within the internet accessible device, whereby the web server in the wireless camera can transmit the video and audio feed to the internet protocol address within the internet accessible device; and
c) utilizing a password in the internet accessible device for the internet protocol address to protect the video and audio feed from being seen and heard by an unauthorized person.
